# EUROPÄISCHE PATENTSCHRIFT

(11) **EP 3 755 752 B1**
(45) Veröffentlichungstag und Bekanntmachung des Hinweises auf die Patenterteilung: **17.04.2024**
(21) Anmeldenummer: 19704018.1
(22) Anmeldetag: 14.02.2019
(51) Int. Cl.: C09J 5/06, A43B 9/12, A43B 13/04, A43D 25/12, A43D 25/20, B29D 35/00, B29D 35/12, B29D 35/14, C08J 9/232

(54) **VERBINDUNG VON KÖRPERN DURCH THERMOPLASTISCHES ELASTOMER MITTELS HOCHFREQUENZSTRAHLUNG**
JOINING OF BODIES BY MEANS OF THERMOPLASTIC ELASTOMER USING HIGH-FREQUENCY WAVES
RACCORDEMENT DE CORPS AU MOYEN D'UN ÉLASTOMÈRE THERMOPLASTIQUE PAR RAYONNEMENT À HAUTE FRÉQUENCE

(30) Priorität: 20.02.2018 EP 18157552
(43) Veröffentlichungstag der Anmeldung: 30.12.2020
(73) Patentinhaber: BASF SE, 67056 Ludwigshafen am Rhein (DE)
(72) Erfinder: PRISSOK, Frank, 49448 Lemfoerde (DE); HARMS, Michael, 49448 Lemfoerde (DE)
(74) Vertreter: BASF IP Association
(86) Internationale Anmeldenummer: PCT/EP2019/053623
(87) Internationale Veröffentlichungsnummer: WO 2019/162172

(56) Entgegenhaltungen:
- EP-A1- 1 475 424
- EP-A1- 2 965 905
- WO-A1-2016/146537

## Beschreibung

Die vorliegende Erfindung betrifft ein Verfahren zum Verbinden von Körpern durch eine thermoplastische Elastomerzubereitung, wobei die thermoplastische Elastomerzubereitung durch elektromagnetische Strahlung erhitzt wird und es dadurch zur Verbindung der Körper kommt. Die Erfindung betrifft weiterhin durch dieses Verfahren hergestellte Formteile, deren

### Stand der Technik

Kompakte thermoplastische Elastomere werden üblicherweise über Extrusion oder Spritzguss hergestellt. Beide Verfahren nutzen als Ausgangsmaterial thermoplastisches Granulat oder Pulver zur Fertigung von Bauteilen. Beim Spritzguss werden aufwendig zu konstruierende, unflexible und kostenintensive Formwerkzeuge benötigt. Dort eingelegte Körper müssen aufwändig fixiert werden, da bei Spritzguss oft hohe Drücke entstehen, die die eingelegten Körper aus ihrer Position schieben. Mittels Extrusion lassen sich Körper nur in einem sehr begrenzten Umfang verbinden, da die Größe der im Extrudat verteilten Körper durch die Größe der Extruderdüse beschränkt ist und eine Verbindung nur in Extrusionsrichtung, also zweidimensional erfolgen kann. Des Weiteren können Körper mittels reaktiver oder geschmolzener Polymere verbunden werden, wobei als allgemeiner Nachteil zu sehen ist, dass sowohl reaktive als auch geschmolzene Polymere eine starke Klebrigkeit zeigen die die Verarbeitung erschwert und die sogenannte offene Verarbeitungszeit, in der das Polymer noch nicht abreagiert bzw. erstarrt ist, nur kurz ist.

Die EP 2 965 905 A1 offenbart ein Verfahren zum Verbinden von Kantenleisten mit Werkstoffen unter Verwendung von Schmelzklebern auf der Basis von thermoplastischem Polyurethan (TPU), denen vorrangig nicht farbneutrale Additive zur Absorption von Mikrowellen zugegeben sind. Ein ähnliches Klebeverfahren, bei dem Ruß enthalten ist, der die Mikrowellenabsorption verbessert, ist in der EP 1 475 424 A1 beschrieben.

Die WO 2016/146 537 beschreibt ein Verfahren zum direkten Verschweißen von expandierten TPU Partikeln unter Einsatz von Mikrowellen absorbierenden Lösungen auf deren Oberfläche. Auch ist es bekannt Pulver auf der Basis von thermoplastischen Elastomeren zu verschweißen, wie es beispielsweise in DE3916874, DE4006648 sowie in DE4107454 beschrieben wird. Hierzu müssen Formen in einem ersten Schritt erhitzt werden, z.B. in einem Ofen, durch Infrarot-Strahlung oder mit Hilfe von Gasbrennern. Dabei muss die Temperatur der Formen so heiß sein, dass das im folgenden Schritt zugegebene thermoplastische Elastomerpulver an den heißen Wandungen zumindest teilweise schmilzt, so dass es zusammensintern kann und einen stabilen Formkörper ergibt. Die Metallform muss in einem weiteren Schritt wieder so stark abgekühlt werden, dass das Elastomer erstarrt und der Formkörper entnommen werden kann. Um ein weiteres Formteil herzustellen muss die Form wieder über den Schmelzpunkt des thermoplastischen Elastomerpulvers aufgeheizt werden.

Durch die Aufwärm- und Abkühlzeiten ist dieses Verfahren sehr langwierig und der Energiebedarf ist durch das wiederkehrende Aufheizen und Abkühlen der üblicherweise massiven Metallformen sehr hoch. Zudem ist der Durchmesser derartiger Bauteile begrenzt, da die Temperatur in den Innenbereich des Formkörpers vordringen muss. Wählt man die Temperatur der Form zu hoch, um diesen Vorgang zu beschleunigen, kann es auf der Oberfläche zum Abbau des Elastomers kommen, womit schlechtere mechanische Eigenschaften einhergehen.

Die Aufgabe der vorliegenden Erfindung bestand somit darin die Nachteile der beschrieben Verfahren zu überwinden und ein besseres Verfahren zum Verbinden von Körpern bereitzustellen.

### Beschreibung

Überraschenderweise gelingt dies mit einem Verfahren bei dem Körper durch eine thermoplastische Elastomerzubereitung miteinander verbunden werden, wobei die Zubereitung mittels elektromagnetischer Strahlung soweit erhitzt wird, dass das Elastomer schmilzt und so die Körper miteinander verbindet, wobei die Frequenz der elektromagnetischen Strahlung zwischen 0,01 GHz und 300 GHz liegt, bevorzugt zwischen 0,01 GHz und 100 GHz, besonders bevorzugt zwischen 0,1 GHz und 50 GHz und das Elastomer ein Additiv enthält, das die elektromagnetische Strahlung absorbiert, das Additiv bei 18°C flüssig ist und ausgewählt ist aus der Gruppe Glycerintriacetat, Triethylenglykol, Tripropylenglykol. oder Zitronensäureester. Die Verbindung wird fest nachdem die erhitzte und dadurch fließfähige Elastomerzubereitung wieder erstarrt ist.

Ein entscheidender Vorteil besteht darin, dass der Raum zwischen den Körpern mit der thermoplastischen Elastomerzubereitung, ausgefüllt werden kann, ohne dass ein großer Druck auf die Körper ausgeübt wird. Dabei liegt die thermoplastische Elastomerzubereitung bevorzugt als Granulat, Folie oder als Pulver vor. Die offene Zeit dieses Verfahrens in der die Körper bewegt und platziert werden können, ist im Prinzip nicht zeitlich begrenzt, was bei einem Arbeitsablauf für das Verbinden von Körpern zu einem Werkstück einen erheblichen Vorteil bedeutet.

In bevorzugten Ausführungsformen werden die elektromagnetischen Wellen mittels Laufzeitröhren, wie Klystrons, Wanderfeldröhren oder Magnetrons, Gunndioden erzeugt, die bevorzugt Festfrequenzen aussenden. In anderen bevorzugten Ausführungsformen werden Backward-wave Oszillatoren für große Frequenzbereiche verwendet, oder Masern für die gerichtete Bestrahlung und Erwärmung von einzelnen Bereichen und/oder Schichten der Bestandteile.

Durch die Tiefenwirkung der elektromagnetischen Strahlung in diesem Frequenzbereich ist eine schnelle, gezielte und genau dosierbare Erwärmung der Elastomerzubereitung möglich und damit ein schnelles kontrolliertes Verschweißen ohne dass die Wärme langsam von außen nach innen dringen muss. Somit ist es auch möglich Körper, die nicht besonders thermostabil sind miteinander zu verschweißen oder entsprechende Gewebe oder andere Körper mit der Elastomerzubereitung zu versteifen oder zu beschichten. Durch das erfindungsgemäße Verfahren werden auch Reparaturen an Stellen möglich, die bisher einem Verschweißen nicht zugänglich waren.

In einer bevorzugten Ausführungsform verschmilzt die Elastomerzubereitung zu kompaktem Material. Dabei kann die Elastomerzubereitung entweder kompakt oder geschäumt vorliegen. In einer bevorzugten Ausführungsform ist die Elastomerzubereitung nach dem Verschweißen kompakt, in einer anderen Ausführungsform ist sie nach dem Verschweißen aufgeschäumt.

In einer anderen bevorzugten Ausführungsform liegt die Elastomerzubereitung als Schaum, bevorzugt als Partikelschaum vor und wird auch beim Verschweißen zu einem Schaum verschweißt. In einer anderen Ausführungsform enthält die Elastomerzubereitung ein Treibmittel. Dieses Treibmittel schäumt die Elastomerzubereitung erst beim Verschweißvorgang auf. Die Körper sind dann durch aufgeschäumte Elastomerzubereitung miteinander verbunden. Die Partikelschäume auf Basis von Granulat- oder Pulverkörnern können in Abhängigkeit der Schüttdichte des Granulates bzw. des Pulvers als zusammenhängender Schaum oder als nur stellenweise verbundener Partikelschaum vorliegen. Die Übergänge können fließend sein. Das Elastomer ist auch bei diesen bevorzugten Ausführungsformen bevorzugt thermoplastisches Polyurethan.

Geeignete Treibmittel sind beispielsweise niedrig siedende Flüssigkeiten, die beim Verschweißvorgang verdampfen. Besonders geeignet sind Flüssigkeiten, welche gegenüber dem organischen Polyisocyanat inert sind und Siedepunkte unter 100 °C aufweisen. Vorzugsweise verwendete flüssige Treibmittel sind halogenierte, vorzugsweise fluorierte Kohlenwasserstoffe, wie z. B. Methylenchlorid und Dichlormonofluormethan, per- oder partiell fluorierte Kohlenwasserstoffe, wie z. B. Trifluormethan, Difluormethan, Difluorethan, Tetrafluorethan und Heptafluorpropan, Kohlenwasserstoffe, wie z. B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z. B. Dimethylether, Diethylether und Furan, Carbonsäureester, wie z. B. Methyl- und Ethylformiat, Ketone, wie z. B. Aceton, und/oder fluorierte und/oder perfluorierte, tertiäre Alkylamine, wie z. B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden. Die zweckmäßigste Menge an niedrigsiedender Flüssigkeit zur Herstellung derartiger aufgeschäumter Elastomere hängt ab von der Dichte, die man erreichen will, sowie von der Menge des bevorzugt mitverwendeten Wassers. Im Allgemeinen liefern Mengen von 1 Gew.-% bis 30 Gew.-%, vorzugsweise 2 Gew.-% bis 11 Gew.-%, bezogen auf das Gewicht des thermoplastischen Polyurethans zufriedenstellende Ergebnisse.

In einer anderen bevorzugten Ausführungsform ist der Elastomerzubereitung ein bei 23°C festes Treibmittel zugesetzt, bevorzugt in Form eines feinen Pulvers, bevorzugt mit einer durchschnittlichen Partikelgröße von 1 µm bis 300 µm, vorzugsweise von 5 µm bis 100 µm und insbesondere von 10 µm bis 80 µm. Über die Partikelgröße kann die Zersetzungstemperatur und -geschwindigkeit beeinflusst werden.

Als feste Treibmittel finden zweckmäßigerweise chemische Verbindungen Verwendung, die sich, innerhalb eines bestimmten, nicht zu großen Temperaturintervalls zersetzen und eine hohe Gasausbeute aufweisen. Hierbei muss die Zersetzungstemperatur der Verschweißtemperatur und der thermischen Beanspruchbarkeit der zu verschäumenden Elastomerzubereitung, bevorzugt auf Basis von thermoplastischem Polyurethan (TPU) angepasst werden. Die jeweiligen Bedingungen können experimentell leicht ermittelt werden. Die Zersetzung des Treibmittels darf nicht zu spontan erfolgen, um einen Wärmestau und damit verbundene Verbrennung des Elastomers zu vermeiden.

Das feste Treibmittel soll sich vorzugsweise homogen mit dem Elastomer vermischen lassen und soll bevorzugt Zersetzungsprodukte ergeben, die gesundheitlich unbedenklich sind, die die Thermostabilitat und mechanischen Eigenschaften des Elastomers möglichst nicht negativ beeinflussen, die nicht ausblühen und keine Verfärbungen hervorrufen.

Bevorzugte feste Treibmittel, die diese Anforderungen zumindest teilweise oder im Wesentlichen vollständig erfüllen, sind Azoverbindungen, Hydrazine, Semicarbazide, Triazole, N-Nitroso-Verbindungen.

Bevorzugte Azoverbindungen sind ausgewählt aus der Gruppe Azoisobuttersaurenitril, Azodicarbonamid und Bariumazodicarboxylat.

Bevorzugte Hydrazine sind Diphenylsulfon-3,3'-disulfohydrazid, 4,4' -Oxybis-(benzolsulfo-hydrazid), Trihydrazinotriazin oder Arylbis(sulfohydrazid).

Bevorzugte Semicarbazide sind p-Toluylensulfonylsemicarbazid oder 4,4'-Oxybis-(benzolsulfonyl-semicarbazid).

Ein bevorzugtes Triazole ist 5-Morpholyl-1,2,3,4-thiatriazol. Bevorzugte N-Nitroso-Verbindungen sind N,N'-Dinitrosopentamethylentetramin oder N, N-Dimethyl-N, N'-dinitrosoterephthalamid.

Von den genannten Verbindungen sind besonders die aus der Gruppe der Azoverbindungen und der Gruppe der Hydrazine bevorzugt, weiter bevorzugt sind Azoisobuttersäurenitril, Diphenylsulfon-3,3'-disulfohydrazid und/oder 4,4' -Oxybis(benzolsulfohydrazid) und insbesondere Azodicarbonamid.

Die festen Treibmittel können als Einzelverbindungen oder als Mischungen eingesetzt werden.

In einer weiteren bevorzugten Ausführungsform werden die Körper mit der Elastomerzubereitung, bevorzugt in einer Form, zu einem Formkörper verbunden. Bei Verwendung einer Form werden die Körper in eine Form gelegt, die Elastomerzubereitung, bevorzugt in Folien-, Pulver- oder Granulat-Form in die Räume zwischen die Körper gegeben. Dann wird die Elastomerzubereitung mit elektromagnetischen Wellen, wie oben ausgeführt, erhitzt. Dadurch werden die Körper über die Elastomerzubereitung miteinander verbunden und dieser Verbund stellt einen Formkörper dar.

Ein Vorteil dieses Verfahrens bei Verwendung von Formen gegenüber üblichen Verfahren zur Herstellung von Formkörpern ist, dass die Formen nicht wärmeleitfähig sein müssen und auch keine hohe Wärmkapazität zur Speicherung der Schmelzenergie benötigen. Somit kann auf Metallformen verzichtet werden.

Stattdessen werden vorzugsweise hochtemperaturbeständige Polymerwerkstoffe, Keramiken oder Glas, die keine Mikrowellenabsorption besitzen, verwendet. Diese Werkstoffe sind beispielsweise als Materialien für Mikrowellengeschirr bekannt.

Durch die Verwendung von Kunststoffformen kann das beschriebene Verfahren eine sehr günstige Alternative zur Herstellung kleiner Stückzahlen darstellen, da die Herstellungskosten der Formen deutlich gering im Vergleich zu Metallformen sind.

Durch einfarbige oder mehrfarbige Einfärbung der Elastomerzubereitung werden zudem vielfältigste Designs möglich.

In einer anderen bevorzugten Ausführungsform wird das Elastomerpulver vor der Bestrahlung mit einem farbigen Pigment, das üblicherweise eine maximale Korngröße von 5 µm bis 10 µm besitzt oder einem flüssigen Farbstoff vermischt.

In einem weiteren bevorzugten Verfahren wird das farbige Pigment nicht homogen mit der Elastomerzubereitung vermischt. Dadurch entstehen Schichten mit unterschiedlichen mechanischen Eigenschaften. Zusätzlich kann es zu unterschiedlicher Färbung kommen, was eine bevorzugte Ausführungsform ist.

In einer anderen bevorzugten Ausführungsform wird die Elastomerzubereitung in mindestens zwei unterschiedlichen Schichten mit unterschiedlicher Färbung aufgetragen. Durch geeignete Wahl der Pigmente kann auch hier die Mechanik beeinflusst werden. Auch kann es durch entsprechenden Wahl von Pigmenten zur optischen Ausgestaltung des Formelementes kommen.

In einer anderen bevorzugten Ausführungsform wird die Elastomerzubereitung mit Verstärkungsmitteln wie Glasfasern, Glaskugeln, Polymer- oder Naturfasern versetzt. Durch geeignete Wahl der Verstärkungsstoffe kann auch hier die Mechanik beeinflusst werden.

Die erfindungsgemäße Verbindung von Körpern durch Verschweißung von thermoplastischen Elastomerzubereitungen durch elektromagnetische Bestrahlung mit besagten Frequenzen, insbesondere solche Elastomerzubereitung aus thermoplastischem Polyurethan, stellt eine vollkommen neue Möglichkeit der Herstellung auch von Verbunden von Körpern dar.

In einer bevorzugten Ausführungsform ist die Zubereitung farblos. Bevorzugt heißt farblos, dass keine farbigen Pigmente oder farbigen Additive in der Zubereitung enthalten sind.

In einer bevorzugten Ausführungsform werden in der farblosen Zubereitung solche Elastomere verwendet, die selbst transparent sind. Bevorzugt heißt transparent, dass die Zubereitung klar bis transluzent ist. Klar heißt, dass man Schemen hinter Folie erkennen kann. Transluzent heißt, dass bei einer Schichtdicke von 1 mm Tageslicht durch die Folie schimmert.

In einer bevorzugten Ausführungsform ist der Gelbgrad YI der Zubereitung, gemessen nach der Norm ASTM E 313 - 15 kleiner als 20, bevorzugt kleiner als 15, weiter bevorzugt kleiner als 10, und besonders bevorzugt kleiner als 5. In einer anderen besonders bevorzugten Ausführungsform ist der Gelbgrad YI der Zubereitung kleiner als 2.

In einer bevorzugten Ausführungsform basiert die Elastomerzubereitung auf einem Elastomer, das durch seine chemische Struktur elektromagnetische Strahlung absorbiert.

Bevorzugt sind thermoplastische Elastomere auf der Basis von thermoplastischem Polyurethan (TPU), thermoplastischem Polyesterelastomer, bevorzugt ausgewählt aus der Gruppe Polyetherester und Polyesterester, und thermoplastische Copolyamide, bevorzugt ausgewählt aus der Gruppe Polyetheramid und Polyesteramid.

Wiederrum andere bevorzugte Elastomere sind Polyamid 12, Polyamid 6/12 und Polyamid 12/12.

Besonders bevorzugt werden Elastomere auf Basis von thermoplastischem Polyurethan (TPU).

In einer bevorzugten Ausführungsform wird thermoplastisches Polyurethan ohne Beschichtung oder den Zusatz von elektromagnetischer Strahlung absorbierendem Additiv verwendet.

Die thermoplastischen Elastomere weisen bevorzugt eine Shore-Härte im Bereich von 30 A bis 78 D auf.

Da die Absorption der elektromagnetischen Strahlung zum Verschweißen der Körper vorzugsweise sehr schnell erfolgen muss, sind häufig zusätzliche Absorber erforderlich, die auch im Falle des TPU die Absorption elektromagnetischer Wellen verbessern und auch bei den oben als bevorzugt ausgeführten Materialien die benötigte Verarbeitungszeit reduzieren. Die schnelle Absorption und Umwandlung in Wärme spielt insbesondere auch bei der Verschweißung von thermolabilen Körpern eine Rolle. Hier muss die Wärme so schnell zu und abgeführt werden, dass eine ungewollte Deformation der Körper nicht stattfindet.

Das oben beschriebene Schweißverfahren kann einerseits verwendet werden, um Körper miteinander zu verschweißen, in einer anderen Ausführungsform kann das Verfahren aber auch zur Beschichtung von Körpern verwendet werden. Dabei werden die Körper entweder so weit isoliert, dass ein Verschweißen nicht stattfindet oder die Elastomerzubereitung wird nur oberflächlich aufgetragen. In eine bevorzugten Ausführungsform wird dies über ein Luftbett oder durch Verwirbelung erreicht. Die Körper werden in dem Luftbett gehalten oder verwirbelt und dort unter Einfluss der elektromagnetischen Strahlung mit der Elastomerzubereitung überzogen.

Somit ist ein weiterer Gegenstand der Erfindung ein Verfahren zum Beschichten von Körpern mit einer thermoplastischen Elastomerzubereitung wobei die Elastomerzubereitung enthaltend das Elastomer mittels elektromagnetischer Strahlung soweit erhitzt wird, dass das Elastomer zumindest teilweise schmilzt und die Frequenz der elektromagnetischen Strahlung zwischen 0,01 GHz und 300 GHz liegt, bevorzugt zwischen 0,01 GHz und 100 GHz, besonders bevorzugt zwischen 0,1 GHz und 50 GHz.

In einem bevorzugten Beschichtungsverfahren ist die Elastomerzubereitung eine Folie, ein Granulat und/oder ein Pulver, wobei das Pulver bevorzugt durch Mirkrogranulierung hergestellt wurde.

### TPU-Chemie

Thermoplastische Polyurethane sind hinlänglich bekannt. Die Herstellung erfolgt durch Umsetzung von (a) Isocyanaten mit (b) gegenüber Isocyanaten reaktiven Verbindungen / Polyol mit einem zahlenmittleren Molekulargewicht von 0,5 × 10³g /mol bis 100 × 10³g /mol und gegebenenfalls (c) Kettenverlängerungsmitteln mit einem Molekulargewicht von 0,05 × 10³ g/mol bis 0,499 × 10³ g /mol gegebenenfalls in Gegenwart von (d) Katalysatoren und/oder (e) üblichen Hilfsstoffen und/oder Zusatzstoffen.

Die Komponenten (a) Isocyanat, (b) gegenüber Isocyanaten reaktive Verbindungen / Polyol, (c) Kettenverlängerungsmittel werden einzeln oder zusammen auch als Aufbaukomponenten angesprochen. Die Aufbaukomponenten einschließlich des Katalysators und/oder der üblichen Hilfsstoffe und/oder Zusatzstoffe werden auch Einsatzstoffe genannt.

Zur Einstellung von Härte und Schmelzindex der TPU können die eingesetzten Mengen der Aufbaukomponenten (b) und (c) in ihren molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung von weicheren thermoplastischen Polyurethanen, z.B. solchen mit einer Shore A Härte von kleiner als 95, vorzugsweise von 95 bis 75 Shore A, können bevorzugt die im wesentlichen difunktionellen Polyole (b) auch als Polyhydroxylverbindungen (b) bezeichnet und die Kettenverlängerungsmittel (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 Shore D bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der erfindungsgemäßen TPU werden die Aufbaukomponenten (a), (b), in einer bevorzugten Ausführungsform auch (c), bevorzugt in Gegenwart eines Katalysators (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Komponenten (b) und (c) 0,95 bis 1,10:1, vorzugsweise 0,98 bis 1,08:1 und insbesondere ungefähr 1,0 bis 1,05:1 beträgt.

Vorzugsweise werden erfindungsgemäß TPU hergestellt, bei denen das TPU ein gewichtsmittleres Molekulargewicht von mindestens 0,1 × 10⁶ g/mol, bevorzugt von mindestens 0,4 × 10⁶ g/mol und insbesondere größer als 0,6 × 10⁶ g/mol aufweist. Die Obergrenze für das gewichtsmittlere Molekulargewicht der TPU wird in aller Regel durch die Verarbeitbarkeit wie auch das gewünschte Eigenschaftsspektrum bestimmt. Bevorzugt liegt das zahlenmittlere Molekulargewicht der TPU nicht über 0,8 × 10⁶ g/mol. Bei den vorstehend für das TPU wie auch für die Aufbaukomponenten (a) und (b) angegebenen mittleren Molekulargewichten handelt es sich um die mittels Gelpermeationschromatographie bestimmten Gewichtsmittel.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Iso-cyanato-3,3,5-trimethyl-5-isocyanatomethyl-cyclohexan (Isophoron-diisocyanat, IPDI), 1,4-Bis(isocyanatomethyl)cyclohexan und/oder 1,3-Bis(isocyanatomethyl)cyclohexan (HXDI), 2,4-Paraphenylendiisocyanat (PPDI), 2,4-Tetramethylxylylendiisocyanat (TMXDI), 4,4'-, 2,4'- und 2,2'-Dicyclohexylmethan-diisocyanat (H12 MDI), 1,6-Hexamethylen-diisocyanat (HDI), 1,4-Cyclohexan-diisocyanat, 1-Methyl-2,4- und/oder -2,6-cyclohexan-diisocyanat, 2,2`-, 2,4'- und/oder 4,4`-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat.

Bevorzugt werden die Isocyanate 2,2`-, 2,4'- und/oder 4,4`-Diphenylmethandiisocyanat (MDI), 1,6-Hexamethylen-diisocyanat (HDI) und 4,4'-, 2,4'- und 2,2'-Dicyclohexylmethan-diisocyanat (H12 MDI) verwendet, besonders bevorzugt ist 4,4''-Diphenylmethandiisocyanat (4,4'-MDI).

In einer anderen bevorzugten Ausführungsform ist 1,6-Hexandiisocyanat bevorzugt.

Als gegenüber Isocyanaten reaktive Verbindungen (b) sind bevorzugt solche mit einem Molekulargewicht zwischen 500 g/mol und 8 ×10**³** g/mol, bevorzugt 0,7 × 10³ g/Mol bis 6,0 × 10³ g/Mol, insbesondere 0,8 × 10³ g/Mol bis 4,0 × 10³ g/Mol.

Die gegenüber Isocyanat reaktive Verbindung (b) hat im statistischen Mittel mindestens 1,8 und höchstens 3,0 zerewitinoffaktiven Wasserstoffatomen, diese Anzahl wird auch als Funktionalität der gegenüber Isocyanat reaktiven Verbindung (b) bezeichnet und gibt die aus einer Stoffmenge theoretisch auf ein Molekül heruntergerechnete Menge der mit Isocyanat reaktiven Gruppen des Moleküls an. Die Funktionalität ist bevorzugt zwischen 1,8 und 2,6, weiter bevorzugt zwischen 1,9 und 2,2 und insbesondere 2.

Die gegenüber Isocyanat reaktive Verbindung ist im Wesentlichen linear und ist eine gegenüber Isocyanat reaktive Substanz oder eine Mischung verschiedener Substanzen, wobei dann die Mischung die genannte Anforderung erfüllt.

Diese langkettigen Verbindungen werden mit einem Stoffmengenanteil von 1 Äquivalent-Mol% bis 80 Äquivalent-Mol%, bezogen auf den Isocyanatgruppengehalt des Polyisocyanats eingesetzt.

Bevorzugt besitzt die gegenüber Isocyanat reaktive Verbindung (b) eine reaktive Gruppe ausgewählt aus der Hydroxylgruppe, der Aminogruppe, der Mercaptogruppe oder der Carbonsäuregruppe. Bevorzugt handelt es sich um die Hydroxylgruppe. Besonders bevorzugt ist die gegenüber Isocyanat reaktive Verbindung (b) ausgewählt aus der Gruppe der Polyesterole, der Polyetherole oder der Polycarbonatdiole, die auch unter dem Begriff "Polyole" zusammengefasst werden.

Besonders bevorzugt werden als Polyole solche aus der folgenden Gruppe gewählt: Copolyester basierend auf Adipinsäure, Bernsteinsäure, Pentandisäure, Sebazinsäure oder deren Mischungen und Gemischen aus 1,2-Ethandiol und 1,4-Butandiol, Copolyester basierend auf Adipinsäure, Bernsteinsäure, Pentandisäure, Sebazinsäure oder deren Mischungen und Gemischen aus 1,4-Butandiol und 1,6-Hexandiol, Polyester basierend auf Adipinsäure, Bernsteinsäure, Pentandisäure, Sebazinsäure oder deren Mischungen und 3-Methyl-Pentandiol-1.5 und/oder Polytetramethylenglykol (Polytetrahydrofuran, PTHF).

Besonders bevorzugt ist die Verwendung des Copolyesters basierend auf Adipinsäure und Gemischen aus 1,2-Ethandiol und 1,4-Butandiol oder des Copolyesters basierend auf Adipinsäure und 1,4-Butandiol und 1,6-Hexandiol oder des Polyesters basierend auf Adipinsäure und Polytetramethylenglykol (Polytetrahydrofuran PTHF) oder deren Mischung.

Ganz besonders bevorzugt wird als Polyol ein Polyester basierend auf Adipinsäure und Polytetramethylenglykol (PTHF) verwendet.

Weiter bevorzugt sind Polyesterdiole, bevorzugt Polycaprolacton, und/oder Polyetherpolyole, bevorzugt Polyetherdiole, weiter bevorzugt solche auf der Basis von Ethylenoxid, Propylenoxid und/oder Butylenoxid, bevorzugt Polypropylenglykol. Ein bevorzugter Polyether ist Polytetrahydrofuran (PTHF), weiter bevorzugt mit einem zahlenmittleren Molekulargewicht von 1,0 × 10³ g/Mol.

In einer anderen bevorzugten Ausführungsform ist das Polyesterpolyol hergestellt aus Hexandiol, Butandiol und Adipinsäure, weiter bevorzugt mit einem zahlenmittleren Molekulargewicht von 2,0 × 10³ g/Mol.

In einer anderen bevorzugten Ausführungsform ist das Polyesterpolyol hergestellt aus Ethylenoxid, Propylenoxid und Adipinsäure, weiter bevorzugt mit einem zahlenmittleren Molekulargewicht von 2,0 × 10³ g/Mol.

In bevorzugten Ausführungsformen werden Kettenverlängerungsmittel (c) eingesetzt, dies sind bevorzugt aliphatische, araliphatische, aromatische und/oder cycloaliphatische Verbindungen mit einem Molekulargewicht von 0,05 × 10³ g/mol bis 0,499 × 10³ g/mol, bevorzugt mit 2 mit Isocyanat reaktiven Gruppen, die auch als funktionelle Gruppen bezeichnet werden.

Bevorzugt ist der Kettenverlängerer (c) mindestens ein Kettenverlängerer ausgewählt aus der Gruppe bestehend aus 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol. Besonders geeignet sind Kettenverlängerer ausgewählt aus der Gruppe bestehend aus 1,2-Ethylenglycol, 1,3-Propandiol, 1,4-Butandiol und 1,6-Hexandiol.

Ganz besonders bevorzugt ist der Kettenverlängerer ausgewählt aus 1,4-Butandiol, 1,6-Hexandiol und Ethandiol, weiter bevorzugt aus 1,4-Butandiol und 1,6-Hexandiol. Besonders bevorzugt ist er 1,6-Hexandiol.

In bevorzugten Ausführungsformen werden mit den Aufbaukomponenten Katalysatoren (d) eingesetzt. Dies sind insbesondere Katalysatoren, die die Reaktion zwischen den NCO-Gruppen der Isocyanate (a) und den Hydroxylgruppen der gegenüber Isocyanaten reaktiven Verbindung (b) und, sofern eingesetzt, dem Kettenverlängerungsmittel (c) beschleunigen. Bevorzugte Katalysatoren sind tertiäre Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan. In einer anderen bevorzugten Ausführungsform sind die Katalysatoren organische Metallverbindungen wie Titansäureester, Eisenverbindungen, bevorzugt Eisen-(III)- acetylacetonat, Zinnverbindungen, bevorzugt solche von Carbonsäuren, besonders bevorzugt Zinndiacetat, Zinndioctanoat, Zinndilaurat oder die Zinndialkylsalze, weiter bevorzugt Dibutylzinndiacetat, Dibutylzinndilaurat, oder Wismutsalze von Carbonsäuren, bevorzugt Wismutdecanoat.

Besonders bevorzugte Katalysatoren sind Zinndioctanoat, Wismutdecanoat. Titansäureester. Der Katalysator (d) wird bevorzugt in Mengen von 0,0001 bis 0,1 Gew.-Teilen pro 100 Gew.-Teile der mit Isocyanaten reaktiven Verbindung (b) eingesetzt.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, bevorzugt gegen Hydrolyse, Licht, Hitze oder Verfärbung, anorganische und/oder organische Füllstoffe, Verstärkungsmittel und/oder Weichmacher.

Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, sterisch gehinderte Phenole, Hindered Amine Light Stabilizer, UV-Absorber, Hydrolyseschutzmittel, Quencher und Flammschutzmittel. Beispiele für kommerzielle Stabilisatoren sind gegeben in Plastics Additives Handbook, 5th Edition, H. Zweifel, ed., Hanser Publishers, München, 2001 ([1]), S.98-S136.

In einer bevorzugten Ausführungsform weisen die UV-Absorber ein zahlenmittleres Molekulargewicht von größer als 0,3 × 10³ g/mol, insbesondere größer als 0,39 × 10³ g/mol, auf.

Ferner sollten die bevorzugt verwendeten UV-Absorber ein Molekulargewicht von nicht größer als 5 × 10³ g/mol, besonders bevorzugt von nicht größer als 2 × 10³ g/mol aufweisen.

Besonders geeignet als UV-Absorber ist die Gruppe der Benzotriazole. Beispiele für besonders geeignete Benzotriazole sind Tinuvin^{®} 213, Tinuvin^{®} 234, Tinuvin^{®} 571, sowie Tinuvin^{®} 384 und das Eversorb^{®}82 . Üblicherweise werden die UV-Absorber in Mengen von 0.01 Gew.-%, bis 5 Gew.-% bezogen auf die Gesamtmasse TPU zudosiert, bevorzugt 0,1 Gew.-%, bis 2,0 Gew. %, insbesondere 0,2 Gew.-% bis 0,5 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zusätzlich zu dem Antioxidans und dem UV-Absorber noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additives Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen nicht größer als 10 × 10³g/mol, besonders bevorzugt nicht größer als 5 × 10³ g/mol sein.

Besonders bevorzugte Hindered Amine Light Stabilizer sind bis-(1,2,2,6,6-pentamethylpiperidyl) sebacat (Tinuvin^{®} 765, Ciba Spezialitätenchemie AG) und das Kondensationsprodukt aus 1-Hydroxyethyl-2,2,6,6-tetramethyl-4-hydroxypiperidin und Bernsteinsäure (Tinuvin^{®} 622). Insbesondere bevorzugt ist das Kondensationsprodukt aus 1-Hydroxyethyl-2,2,6,6-tetramethyl-4-hydroxypiperidin und Bernsteinsäure (Tinuvin^{®} 622), wenn der Titangehalt des fertigen Produktes kleiner als 150 ppm, bevorzugt kleiner als 50 ppm, insbesondere kleiner als 10 ppm, jeweils bezogen auf die eingesetzten Aufbaukomponenten ist.

HALS Verbindungen werden bevorzugt in einer Konzentration von 0,01 Gew.-% bis 5 Gew.-% eingesetzt, besonders bevorzugt von 0,1 Gew.-% bis 1 Gew.-%, insbesondere von 0,15 Gew.-% bis 0,3 Gew.-%, jeweils bezogen auf das Gesamtgewicht des thermoplastischen Polyurethanes bezogen auf die eingesetzten Aufbaukomponenten.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

In einer bevorzugten Ausführungsform ist das thermoplastische Polyurethan hergestellt aus den Aufbaukomponenten Polytetrahydrofuran, besonders bevorzugt mit einem zahlenmittleren Molekulargewicht von 1,0 × 10³ g/Mol, und 1,6-Hexandiisocyanat, und weiter bevorzugt 1,6-Hexandiol. Auf diese bevorzugten TPU wird auch mit TPU 1 Bezug genommen.

In einer anderen bevorzugten Ausführungsform ist das thermoplastische Polyurethan hergestellt aus den Aufbaukomponenten Polyesterdiol, hergestellt aus Hexandiol, Butandiol und Adipinsäure, bevorzugt mit einem zahlenmittleren Molekulargewicht von 2,0 × 10³ g/Mol, und 4,4'-Methylendiphenylendiisocyanat, und weiter bevorzugt 1,4-Butandiol. Auf diese bevorzugten TPU wird auch mit TPU 2 Bezug genommen.

In einer anderen bevorzugten Ausführungsform ist das thermoplastische Polyurethan hergestellt aus den Aufbaukomponenten Polyesterdiol, hergestellt aus Ethylenoxid, Propylenoxid und Adipinsäure, bevorzugt mit einem zahlenmittleren Molekulargewicht von 2,0 × 10³ g/Mol, und 4,4'-Methylendiphenylendiisocyanat, und weiter bevorzugt 1,4-Butandiol. Auf diese bevorzugten TPU wird auch mit TPU 3 Bezug genommen.

In einer anderen bevorzugten Ausführungsform ist das thermoplastische Polyurethan hergestellt aus den Aufbaukomponenten Polyesterdiol, hergestellt aus Ethylenglycol, Butandiol und Adipinsäure, bevorzugt mit einem zahlenmittleren Molekulargewicht von 2,0 × 10³ g/Mol, und 4,4'-Methylendiphenylendiisocyanat, und weiter bevorzugt Monoethylenglycol. Auf diese bevorzugten TPU wird auch mit TPU 4 Bezug genommen.

In einer bevorzugten Ausführungsform ist das thermoplastische Polyurethan ausgewählt aus der Gruppe TPU1, TPU 2, TPU 3 und TPU4, bevorzugt aus der Gruppe TPU 1, TPU 2 und TPU 3, weiter bevorzugt aus der Gruppe TPU 1 und TPU 2. Ganz besonders bevorzugt ist TPU 1.

Nähere Angaben über die oben genannten Hilfsmittel- und Zusatzstoffe sind der Fachliteratur zu entnehmen, z.B. aus Plastics Additives Handbook, 5th Edition, H. Zweifel, ed., Hanser Publishers, München, 2001.

Die Herstellung der TPU kann nach den bekannten Verfahren diskontinuierlich oder kontinuierlich, beispielsweise mit Reaktionsextrudern oder dem Bandverfahren nach dem "one-shot-" oder dem Prepolymer-Verfahren, bevorzugt nach dem "one-shot"-Verfahren erfolgen. Bei dem "one-shot-"Verfahren werden die zur Reaktion kommenden Komponenten (a), (b), in bevorzugten Ausführungsformen auch die Komponenten (c), (d) und/oder (e) nacheinander oder gleichzeitig miteinander vermischt, wobei die Polymerisationsreaktion unmittelbar einsetzt. Beim Extruderverfahren werden die Aufbaukomponenten (a), (b) sowie in bevorzugten Ausführungsformen auch (c), (d) und/oder (e) einzeln oder als Gemisch in den Extruder eingeführt und, bevorzugt bei Temperaturen von 100°C bis 280°C, vorzugsweise 140°C bis 250°C, zur Reaktion gebracht. Das erhaltene Polyurethan wird extrudiert, abgekühlt und granuliert.

Bevorzugt wird für die Herstellung des thermoplastischen Polyurethans ein Zweiwellenextruder verwendet, da der Zweiwellenextruder zwangsfördernd arbeitet und so eine präzisere Einstellung der Temperatur und Ausstoßmenge auf dem Extruder möglich ist.

Die verwendete Elastomerzubereitung liegt bevorzugt als Granulat, Folie oder Pulver vor. Granulate werden üblicherweise mit einem Extruder hergestellt. Granulate oder Pulver haben bevorzugt einen maximalen Durchmesser von 0,4 mm bis 20 mm, bevorzugt 0,5 mm bis 10 mm, und besonders bevorzugt 1 mm bis 7 mm. In anderen bevorzugten Ausführungsformen ist die Folie weniger als 0,2 mm dick, weiter bevorzugt weniger als 0,1 mm. Derartige Folien können besonders gut als Klebefolien verwendet werden. In einer bevorzugten Ausführungsform hat das Pulver eine Schüttdichte im Bereich von 200 kg/m³ bis 900 kg/m³.

Für die Herstellung von Pulvern können alle üblichen Pulverisiertechnologien und Vermahlungstechniken, wie Mikrogranulierung, Vermahlung, kryogenes Vermahlen, Fällung, Schmelzedispergierung, eingesetzt werden um aus den Ausgangsmaterialien, die bevorzugt als Granulat vorliegen, Pulver zur erzeugen. In einer bevorzugten Ausführungsform wird Kryo-Vermahlung und Mikrogranulierung verwendet, besonders bevorzugt ist die Mikrogranulierung. Diese Pulver besitzen eine besonders glatte Oberfläche, zeigen daher ein besseres Fließverhalten und weniger Lufteinschlüsse im Formteil, was sich in verbesserten mechanischen Eigenschaften, insbesondere einer verbesserten Bruchdehnung und Zugfestigkeit der so hergestellten Prüfkörper äußert.

In bevorzugten Ausführungsformen haben die Pulver eine maximale räumliche Ausdehnung von 1 µm bis 3 mm, bevorzugt von 50 µm bis 2 mm, und besonders bevorzugt von 200 µm bis 1,0 mm.

In einer bevorzugten Ausführungsform hat das Pulver eine Schüttdichte im Bereich von 200 kg/m³ bis 900 kg/m³.

In einer weiteren bevorzugten Ausführungsform enthält die Folie, das Granulat oder Pulver auf Basis von thermoplastischem Elastomer mindestens ein Additiv, das die elektromagnetische Strahlung absorbiert. Durch die Absorption der elektromagnetischen Strahlung werden primär die Additive, dadurch aber auch das Pulver aus dem thermoplastischen Elastomer, in dem sie sich befinden, bis zur Schmelze erhitzt.

Erfindungsgemäß ist das Additiv bei 18 °C flüssig.

In einer bevorzugten Ausführungsform hat das Additiv, das die elektromagnetische Strahlung absorbiert ein Absorptionsmaximum, das zwischen 0,01 GHz und 300 GHz liegt, bevorzugt zwischen 0,01 GHz und 100 GHz.

In einer weiteren bevorzugten Ausführungsform ist der Anteil des mikrowellenabsorbierenden Additivs 0,01 Gew.-% bis 30 Gew.-%, bevorzugt 0,01 Gew.-% bis 10 Gew.-%, besonders bevorzugt 0,01 Gew.-% bis 5 Gew.-% bezogen auf das gesamte Pulver.

In einer bevorzugten Ausführungsform ist das Additiv, das elektromagnetische Strahlen absorbiert mit dem thermoplastischen Elastomer vermischt, in einer anderen bevorzugten Ausführungsform ist das Elastomer in dem Pulver zumindest teilweise von einer Beschichtung umgeben, die das Additiv enthält, das die elektromagnetische Strahlung absorbiert.

Ein weiterer Gegenstand der Erfindung ist daher auch das Verfahren zur Herstellung von den erfindungsgemäßen Granulaten oder Pulvern bei dem das thermoplastische Elastomer mit dem Additiv, das elektromagnetische Strahlen absorbiert durchmischt wird, oder das Elastomer zumindest teilweise mit dem Additiv beschichtet wird, d.h. auf das Elastomerpulver wird eine Beschichtung enthaltend das Additiv aufgetragen.

Diese Additive werden bevorzugt als Reinstoff, Lösung, Pulver oder Dispersion mit üblichen Mischverfahren sowie Beschichtungsverfahren, wie Besprühen, Tauchen oder Benetzen, mit und ohne zusätzliche Hilfsstoffe auf das Polyurethanpulver aufgebracht. Hierzu werden bevorzugt Mischer, Sprühvorrichtungen, Tauchvorrichtungen bzw. Trommelapparaturen eingesetzt.

Besonders bevorzugt wird das Elastomerpulver mit einem die elektromagnetische Strahlung absorbierenden Weichmacher angereichert oder mit einer Emulsion einer die elektromagnetische Strahlung absorbierenden Substanz in einem Weichmacher beschichtet.

Beispiele für Weichmacher sind: Phthalate, Alkylsulfonsäureester, Zitronensäureester, Adipinsäureester, 1,2-Cyclohexandicarbonsäurediisononylester und Glycerinester.

In dem erfindungsgemäßen Verfahren zur Herstellung des Granulats oder Pulvers werden zunächst die Partikeloberflächen dünn mit der die elektromagnetische Strahlung absorbierenden Substanz, in z.B. einem Taumelmischer, beschichtet. Das so beschichtete Granulat oder Pulver kann zum Verschweißen von Körpern verwendet werden. In bevorzugten Ausführungsform wird das Elastomer mit dem Additiv in eine nicht die elektromagnetische Strahlung absorbierende Form gegeben und die Körper durch Bestrahlung des Elastomers mit der elektromagnetischen Strahlung verschweißt.

Das Additiv ist vorzugsweise eine hochpolare, flüssige Verbindung, erfindungsgemäß Glycerintriacetat, Triethylen- oder Tripropylenglykol oder Zitronensäureester. Besonders bevorzugt sind Glycerintriacetat, Triethylen- oder Tripropylenglykol.

Ganz besonders bevorzugt werden die thermoplastischen Pulver mit einem 1,2,3-Propantrioltriacetat (Triacetin) angereichert.

Die bevorzugten Additive lassen sich besonders gut mit den thermoplastischen Elastomeren, bevorzugt dem thermoplastischen Polyurethan vermischen, d.h. sie sind besonders verträglich und absorbieren aufgrund ihrer hohen Polarität und der OH, CO Bindungen gut die elektromagnetische Strahlung.

Die Beschichtung basiert in einer bevorzugten Ausführungsform auf einer Substanz, die einen Siedepunkt oberhalb von 120°C besitzt und die in dem Elastomer lösliche ist, d.h. dass in dem Elastomer mindestens 50 g/kg der Beschichtung löslich ist.

In einer Ausführungsform liegt nur ein Additiv, das elektromagnetische Strahlung absorbiert, vor, in einer anderen Ausführungsform sind mindestens zwei derartige Additive in oder auf dem Elastomer vorhanden.

Das Additiv absorbiert die elektromagnetische Strahlung und erwärmt so gezielt die Kontaktstellen des Granulates oder Pulvers, so dass diese untereinander und in bevorzugten Ausführungsformen auch mit den Körpern verschweißen.

Beim Einbringen in das Elastomer verteilen sich die Additive aufgrund ihrer Löslichkeit nach kurzer Zeit gleichmäßig im Polymer und werden in diesem stabil gehalten. Wird auf zusätzliche Absorber verzichtet, lassen sich ausreichend polare Polymere ebenfalls durch geeignete hochfrequente Strahlung (MW) verschweißen, allerdings ist die erforderliche Aufheizzeit länger und ggf. die erreichte Temperatur geringer.

In einer bevorzugten Ausführungsform liegt ein Absorptionsmaximum des Additivs in dem Frequenzbereich der für die Verbindung verwendeten Hochfrequenzstrahlung.

Gegenstand dieser Erfindung ist weiterhin ein Formkörper, erhältlich nach einem der beschriebenen Verfahren. Dieser Formkörper hat bevorzugt eine Bruchdehnung größer 100%, weiter bevorzugt von mehr als 200 %.

Bei dem Formkörper handelt es sich in einer bevorzugten Ausführungsform um einen Bestandteil eines Schuhes, bevorzugt um eine Schuhsohle. Weiter bevorzugt besteht die Schuhsohle aus einer Laufsohle und einer Mittelsohle, wobei die Laufsohle, die ein Körper ist, und die Mittelsohle, die ein zweiter Körper ist, durch die Elastomerzubereitung verbunden sind. In einer weiteren Ausführungsform ist die Sohle mit dem Obernschuh durch die Elastomerzubereitung verbunden. In einer Ausführungsform ist die Mittelsohle aus thermoplastischem Polyurethan, in einer anderen Ausführungsform ist die Elastomerzubereitung auf der Basis von thermoplastischem Polyurethan. In einer weiteren bevorzugten Ausführungsform ist die Mittelsohle und die Elastomerzubereitung auf der Basis von thermoplastischem Polyurethan. In einer anderen bevorzugten Ausführungsform sind zusätzlich die Laufsohle und/oder die weiteren Körper aus thermoplastischem Polyurethan.

In einer weiter bevorzugten Ausführungsform wird der Formkörper an mindestens einer Außenseite mit einer Haut abgeschlossen. Diese Haut wird bevorzugt durch das Einwirken der elektromagnetischen Strahlung aus einem Pulver oder einem Granulat erzeugt. Diese Haut ist bevorzugt eine Sohle eines Schuhs.

In einer bevorzugten Ausführungsform wird eine Folie, die bevorzugt naturfarben, eingefärbt oder bedruckt ist, z.B. mit einem Logo, in eine Form einlegen, in diese Form werden dann, die Körper, bei denen es sich bevorzugt um expandierten Partikelschaum, bevorzugt aus thermoplastischem Polyurethan handelt, in die Form eingefüllt und das thermoplastische Elastomer, das bevorzugt aus thermoplastischem Polyurethan ist, hinzugegeben und dann zu einer Schuhsohle verschweißt. In einer weiteren bevorzugten Ausführungsform werden Bestandteile des Oberschuhs oder der gesamte Oberschuh mit der Schuhsohle über das thermoplastische Elastomer, bevorzugt thermoplastisches Polyurethan, bevorzugt Partikelschaum, verschweißt. Anstatt expandierter Partikelschäume zuzugeben wird in einer anderen bevorzugten Ausführungsform Pulver oder Granulat, jeweils enthaltend Treibmittel, wie an anderer Stelle ausgeführt, zugegeben und verschweißt. Dadurch erhält man in einem Schritt eine Sohle, ggf. einen ganzen Schuh. Dieser besteht bevorzugt zu mehr als 30 Gew.%, weiter bevorzugt mehr als 50 Gew.%, weiter bevorzugt mehr als 70 Gew.%, weiter bevorzugt mehr als 90 Gew.-% und besonders bevorzugt mehr als 95 Gew.% aus thermoplastischem Polyurethan.

In einer bevorzugten Ausführungsform sind die Körper Fasern oder Gewirke, bevorzugt solche aus Kunststoff, Glas und/oder Metall, die nach der Verarbeitung ein eigenes Netzwerk innerhalb der Formteile ausbilden. Hierdurch können besonders stabile Formteile hergestellt werden. In einer weiteren bevorzugten Ausführungsform ist zumindest ein Körper eine Folie.

In einer anderen bevorzugten Ausführungsform sind die Körper expandierte Partikelschäume, bevorzugt aus thermoplastischem Polyurethan, weiter bevorzugt ist das Elastomer thermoplastisches Polyurethan.

Weiter bevorzugt sind Polyesterdiole, bevorzugt Polycaprolacton, und/oder Polyetherpolyole, bevorzugt Polyetherdiole, weiter bevorzugt solche auf der Basis von Ethylenoxid, Propylenoxid und/oder Butylenoxid, bevorzugt Polypropylenglykol. Ein besonders bevorzugter Polyether ist Polytetrahydrofuran (PTHF).

In einer bevorzugten Ausführungsform sind die Körper expandierte Partikelschäume und das Elastomer ist ein thermoplastisches Polyurethan, das mindestens ein Additiv enthält, das die elektromagnetische Strahlung gemäß Bevorzugung in diesem Text absorbiert.

In einer anderen bevorzugten Ausführungsform sind die Körper, die miteinander verschweißt werden, gleichartig. Gleichartig heißt, dass sie einer Menge entnommen sind, die nach demselben Verfahren hergestellt werden, wie z.B. Kugeln, Granulatkörner etc.

In einer anderen bevorzugten Ausführungsform haben die Körper vergleichbare räumliche Ausdehnung, und sind weiter bevorzugt zusätzlich gleichartig.

Erfindungsgemäß sind auch alle möglichen Kombinationen der oben als bevorzugt genannten Ausführungsformen.

Gegenstand der Erfindung ist weiterhin eine Elastomerzubereitung, die zumindest ein Additiv enthält das die elektromagnetische Strahlung absorbiert, wobei das Absorptionsmaximum zwischen 0,01 GHz und 300 GHz liegt, bevorzugt zwischen 0,01 GHz und 100 GHz, besonders bevorzugt zwischen 0,1 GHz und 50 GHz. In einer bevorzugten Ausführungsform ist der Anteil des die elektromagnetische Strahlung absorbierenden Additivs 0,01 Gew.-% bis 30 Gew.-%, bevorzugt 0,01 Gew.-% bis 10 Gew.-%, besonders bevorzugt 0,01 Gew.-% bis 5 Gew.-% bezogen auf die Elastomerzubereitung.

In einer weiter bevorzugten Ausführungsform liegt das Additiv auf der Oberfläche der Elastomerzubereitung in einer höheren Konzentration als im Kern der Elastomerzubereitung vor.

In einer bevorzugten Ausführungsform hat das Additiv in der Elastomerzubereitung einen Siedepunkt oberhalb von 120°C und ist in dem Elastomer mit mindestens 50 g/kg löslich. Erfindungsgemäß ist das Additiv, das die elektromagnetische Strahlung absorbiert, aus der Gruppe umfassend Glycerintriacetat, Triethylenglykol, Tripropylenglykol oder Zitronensäureester ausgewählt.

Ganz besonders bevorzugt wird dieses Additiv in einer Elastomerzubereitung auf der Basis von thermoplastischem Polyurethan verwendet.

Bevorzugt werden die Elastomere zur Herstellung von Formteilen verwendet, die ausgewählt sind aus der Gruppe der Beschichtung, Dämpfungselement, Faltenbalg, Folie, Faser, Formkörper, Fußboden für Gebäude oder Transport, Non-Woven, Dichtung, Hohlkörper, Einrichtungsgegenstände, Rolle, Schuhsohle, Schlauch, Kabel, Kabelstecker, Kabelummantelung, Kissen, Kunstleder, Laminat, Möbel, Profil, Riemen, Sattel, Schuhe, Sohlen, Steckverbindung, Schleppkabel, Solarmodul, Stiefel, Bekleidung, Sportgeräte, Werkzeuge, Gehäuse, Taschen, Verkleidung in Automobilen, Verpackungen, Wischerblatt. Bevorzugte Sichtteile in Automobilen sind Lenkräder, Schaltknüppel und Griffe.

Jede dieser Verwendungen für sich genommen ist eine bevorzugte Ausführungsform, die auch als Anwendung bezeichnet wird.

Beispielhaft ist die Erfindung an folgendem Beispiel erklärt, die jedoch in keiner Weise das Anwendungsgebiet der Erfindung begrenzen.

### Beispiele

### 1. Beispiel - Einsatzstoffe und Herstellung:

- TPU-Pulver:: thermoplastisches Polyurethan, erhalten aus granuliertem thermoplastischem Polyurethan der BASF Polyurethanes GmbH, Lemförde, Deutschland
- TPU1-Pulver:: Durch kryogene Vermahlung, von granuliertem thermoplastischen Polyurethan TPU1, der BASF Polyurethanes GmbH, erhaltenes Pulver, mit einer Partikelgröße von 125µm. Die Schüttdichte dieses Pulvers beträgt 400 g/L
- TPU2-Pulver:: Durch kryogene Vermahlung, von granuliertem thermoplastischen Polyurethan TPU2, der BASF Polyurethanes GmbH, erhaltenes Pulver, mit einer Partikelgröße von 125µm. Die Schüttdichte dieses Pulvers beträgt 400 g/L
- PVC:: Polyvinylchlorid, amorpher thermoplastischer Kunststoff
- PA:: Polyamid, linearer thermoplastischer Kunststoff
- Glasfasern:: unidirektional gewebtes Glasfilamentgewebe mit einem Flächengewicht von 220 Gramm pro Quadratmeter
- Gewebetuch:: 100% Baumwollgewebe
- Mikrowellenabsorber:: Triacetin (1,2,3-Propantrioltriacetat)

Rezeptur der thermoplastischen Polyurethane (TPU)

**Tabelle 1 - Ausgangssubstanzen zur Herstellung der thermoplastischen Polyurethane**

| Bezeichnung | Chemische Zusammensetzung | Quelle |
|---|---|---|
| Iso1 | 1,6 Hexandiisocyanat | BASF |
| Iso2 | 4,4'-Methylendiphenylendiisocyanat | BASF |
| Polyol1 | Polytetrahydrofuran, Mn: 1000, OH-Zahl : 111,1 | BASF |
| Polyol2 | Polyesterdiol aus Hexandiol, Butandiol und Adipinsäure Mn: 2200, OH-Zahl : 51 | BASF |
| Polyol3 | Polyesterdiol aus Ethylenglykol, Butandiol und Adipinsäure, Mn:2000, OH-Zahl: 56 | BASF |
| Polyol4 | Polyetherdiol aus Ethylenoxid, Propylenoxid, Mn 1770, OH-Zahl: 63 | BASF |
| KV1 | 1,4-Butandiol, Kettenverlängerer | BASF |
| KV2 | 1,6-Hexandiol, Kettenverlängerer | BASF |
| KV3 | Monoethylenglykol | BASF |
| WM1 | Acetyltributylcitrat | |
| AO1 | Antioxidanz | BASF |
| AO2 | Antioxidanz | BASF |
| LS1 | Lichtschutzmittel | BASF |
| HS1 | Hydrolysestabilisator Carbodiimid | BASF |
| FL1 | Talkum Füllstoff | |
| GL1 | Wachs Verarbeitungshilfsmittel | |
| GL2 | Esterwachs | |

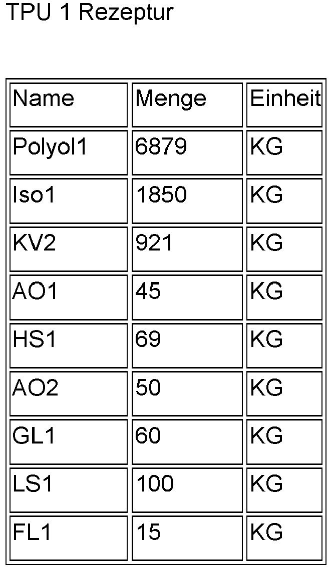

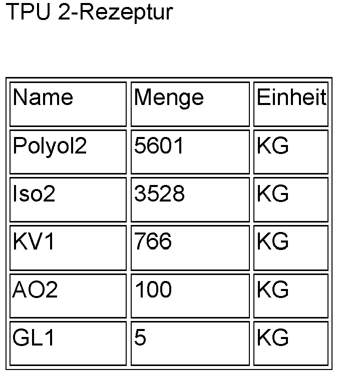

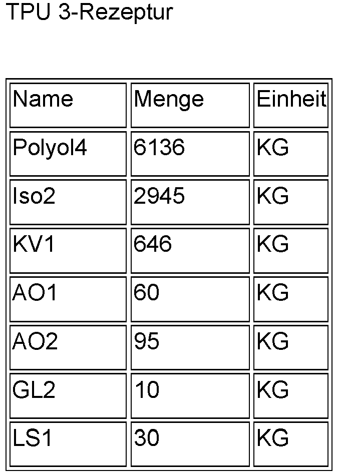

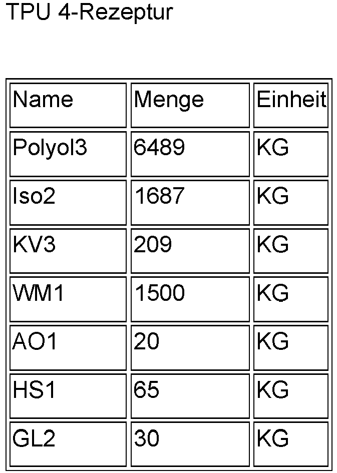

### Herstellung der Polymere im Handgussverfahren

Die Polyole wurden bei 80 °C in einem Behälter vorgelegt und mit den Komponenten gemäß den oben genannten Rezepturen bei einer Ansatzgröße von 2 kg unter starkem Rühren vermischt. Die Reaktionsmischung erhitzte sich auf über 110 °C und wurde dann auf einen auf ca. 110 °C aufgeheizten, teflonbeschichteten Tisch ausgegossen. Die erhaltene Gießschwarte wurde 15 Stunden bei 80 °C getempert, anschließend groß zerkleinert und zu Granulat extrudiert.

Die Extrusion erfolgte auf einem Doppelschneckenextruder, der einen Strangdurchmesser von ca. 2 mm lieferte.

| Extruder: | gleichläufiger Doppelschneckenextruder, APV MP19 |
|---|---|
| Temperaturprofil: | HZ1 (Einzug) 175 °C bis 185 °C |
| | HZ2 180 °C bis 190 °C |
| | HZ3 185 °C bis 195 °C |
| | HZ4 185 °C bis 195 °C |
| | HZ5 (Düse) 180 °C bis 190 °C |
| Schneckendrehzahl: | 100 U/min |
| Druck: | ca. 10 bis 30 bar |
| Strangkühlung: | Wasserbad (10 °C) |

Mikrogranulate wurden auf einem Berstorff Zweischneckenextruder ZE 40, der mit einer Mikrolochplatte und einer Mikrounterwassergranulierung der Firma Gala ausgestattet war, hergestellt.

Die Pulvermahlung erfolgte auf einer Retsch Mühle ZM200, mit verschiedenen Siebeinsätzen von 0,35 mm, 1 mm und 2 mm, unter N2 Kühlung, sowie Aussiebung der in den Beispielen beschriebenen Fraktionen.

### 2. Beispiel - Geräte:

Labormikrowellensystem des Typs MLS-Ethos plus mit einer Höchstleistung von 2,5kW.

### 3. Beispiel - Messmethoden:

### 3.1 Partikelgröße: Bestimmung anhand von Mikroskopieaufnahmen

### 3.2 Schälfestigkeit

Die Verschweißqualität der erfindungsgemäß verschweißten Proben wurde im Prüflabor mittels Universalprüfmaschine der Firma Zwick bestimmt. Die Proben wurden im Winkel von 180° auseinandergezogen, wobei der Verlauf der Kraft über die Messstrecke von der Prüfsoftware aufgezeichnet wird. Die so ermittelbare Kraft wird auf die Breite des Prüfkörpers bezogen und als Schälkraft ausgegeben. Die genaue Durchführung kann der VW Audi Prüfvorschrift PV 2034 "Rollenschälversuch" (09/2009) entnommen werden.

### 3.3 Schüttdichte:

Zur Bestimmung der Schüttdichte wurde ein 700 ml Gefäß mit dem Pulver gefüllt und das Gewicht mittels einer Waage bestimmt. Dabei beträgt die Genauigkeit ± 10 g/l.

### 3.4 Raumgewicht

Das Raumgewicht wurde nach der zum Zeitpunkt der Anmeldung gültigen DIN EN ISO 1183-1, A ermittelt.

### 3.5 Bruchdehnung und Zugfestigkeit

Die Bruchdehnung und die Zugfestigkeit wurden nach der zum Zeitpunkt der Anmeldung gültigen DIN 53504-S2 bestimmt.

### 3.6 Shore A Härte

Die Shore A Härte wurde bestimmt nach der zum Zeitpunkt der Anmeldung gültigen DIN ISO 7619-1

### 3.7 Abrieb

Der Abrieb wurde nach der zum Zeitpunkt der Anmeldung gültigen DIN ISO 4649 bestimmt.

**Tabelle 1: Eigenschaften der thermoplastischen Polyurethane**

| | TPU 1 | TPU 2 | TPU 3 | TPU 4 |
|---|---|---|---|---|
| Raumgewicht [g/l] | 1,1 | 1,1 | 1,1 | 1,1 |
| Shorehärte | 93 | 93 | 88 | 92 |
| Zugfestigkeit [MPa] | 13 | 10 | 12 | 12 |
| Bruchdehnung [MPa] | 700 | 510 | 730 | 630 |
| Abrieb [mm³] | 116 | 198 | 170 | 132 |
| Gelbgrad YI | 1,22 | 1,70 | 3,99 | 7,64 |

### 4. Beispiel

Die transparenten 30 µm dicken TPU-Folien auf der Basis von TPU 1 wurden einlagig in eine Teflonform der Größe 100 mm × 70 mm gelegt, darauf wurden 2,5g TPU1-Pulver gestreut und mit einer zweiten Folienlage auf Basis von TPU 1 abgedeckt. In der Mikrowelle erfolgte eine zweiminütige Bestrahlung mit einer Leistung von 600 W. Um eine homogene Mikrowellenbestrahlung zu erzielen, wurden die Formen während der Bestrahlung auf einem Drehteller rotiert und zusätzlich wurde die Form nach 1 Minute per Hand um 180° auf der horizontalen Achse gedreht. Nach 2 Minuten ist das Pulver aufgeschmolzen und hat die Folien miteinander verschweißt. Nach einer kurzen Abkühlphase von 3 Minuten bei Raumtemperatur von 22°C konnten die verschweißten Folien aus der Form entnommen werden. Zur Prüfung der Schweißnahtqualität, wurde an diesen Proben ein Schälversuch durchgeführt.

### 5. Beispiel

Die orangen 0,12mm dicken TPU-Folien auf der Basis von TPU 3 wurden einlagig in eine Teflonform der Größe 100 mm × 70 mm gelegt, darauf wurden 2 g TPU1-Pulver gestreut und mit einer zweiten Folienlage auf Basis von TPU 3 abgedeckt. In der Mikrowelle erfolgte eine zweiminütige Bestrahlung mit einer Leistung von 600 W. Um eine homogene Mikrowellenbestrahlung zu erzielen, wurden die Formen während der Bestrahlung auf einem Drehteller rotiert und zusätzlich wurde die Form nach 1 Minute per Hand um 180° auf der horizontalen Achse gedreht. Nach 2 Minuten ist das Pulver aufgeschmolzen und hat die Folien miteinander verschweißt. Nach einer kurzen Abkühlphase von 3 Minuten bei Raumtemperatur von 22°C konnten die verschweißten Folien aus der Form entnommen werden. Zur Prüfung der Schweißnahtqualität, wurde an diesen Proben ein Schälversuch durchgeführt.

### 6. Beispiel

Die weiße 0,45 mm dicke PVC-Folie wurde einlagig in eine Teflonform der Größe 100 mm × 70 mm gelegt, darauf wurden 1 g TPU1-Pulver gestreut und mit einer zweiten PVC-Folienlage abgedeckt. In der Mikrowelle erfolgte eine 80 Sekunden lange Bestrahlung mit einer Leistung von 600 W. Um eine homogene Mikrowellenbestrahlung zu erzielen, wurden die Formen während der Bestrahlung auf einem Drehteller rotiert und zusätzlich wurde die Form nach 1 Minute per Hand um 180° auf der horizontalen Achse gedreht. Nach 80 Sekunden ist das Pulver aufgeschmolzen und hat die Folien miteinander verschweißt. Nach einer kurzen Abkühlphase von 3 Minuten bei Raumtemperatur von 22°C konnten die verschweißten Folien aus der Form entnommen werden. Zur Prüfung der Schweißnahtqualität, wurde an diesen Proben ein Schälversuch durchgeführt.

### 7. Beispiel

Die transluzenten 0,5 mm dicken PA-Folien (PA=Polyamid) wurden einlagig in eine Teflonform der Größe 100 mm × 70 mm gelegt, darauf wurden 1 g TPU2-Pulver gestreut und mit einer zweiten PA-Folienlage abgedeckt. In der Mikrowelle erfolgte eine 70 Sekunden lange Bestrahlung mit einer Leistung von 600 W. Um eine homogene Mikrowellenbestrahlung zu erzielen, wurden die Formen während der Bestrahlung auf einem Drehteller rotiert und zusätzlich wurde die Form nach 1 Minute per Hand um 180° auf der horizontalen Achse gedreht. Nach 80 Sekunden ist das Pulver aufgeschmolzen und hat die Folien miteinander verschweißt. Nach einer kurzen Abkühlphase von 3 Minuten bei Raumtemperatur von 22°C konnten die verschweißten Folien aus der Form entnommen werden. Zur Prüfung der Schweißnahtqualität, wurde an diesen Proben ein Schälversuch durchgeführt.

### 8. Beispiel

Die 2 mm dicken TPU-Platten auf Basis von TPU 4 wurden einlagig in eine Teflonform der Größe 100 mm × 70 mm gelegt, darauf wurden 0,5 g TPU1-Pulver gestreut und mit einer zweiten Platte abgedeckt. In der Mikrowelle erfolgte eine 40 Sekunden lange Bestrahlung mit einer Leistung von 600 W. Um eine homogene Mikrowellenbestrahlung zu erzielen, wurden die Formen während der Bestrahlung auf einem Drehteller rotiert und zusätzlich wurde die Form nach 35 Sekunden per Hand um 180° auf der horizontalen Achse gedreht. Nach 40 Sekunden ist das Pulver aufgeschmolzen und hat die Platten miteinander verschweißt. Nach einer kurzen Abkühlphase von 3 Minuten bei Raumtemperatur von 22°C konnten die verschweißten Folien aus der Form entnommen werden. Zur Prüfung der Schweißnahtqualität, wurde an diesen Proben ein Schälversuch durchgeführt.

### 9. Beispiel

Das 0,35 mm dicke Glasgewebe wurde einlagig in eine Teflonform der Größe 100 mm × 70 mm gelegt, darauf wurden 2 g TPU-Pulver auf Basis von TPU 2 gestreut und mit einem zweiten Glasgewebestück abgedeckt. In der Mikrowelle erfolgte eine 105 Sekunden lange Bestrahlung mit einer Leistung von 700 W. Um eine homogene Mikrowellenbestrahlung zu erzielen, wurden die Formen während der Bestrahlung auf einem Drehteller rotiert und zusätzlich wurde die Form nach 60 Sekunden per Hand um 180° auf der horizontalen Achse gedreht. Nach 105 Sekunden ist das Pulver aufgeschmolzen und hat beide Glasgewebelagen miteinander verschweißt. Nach einer kurzen Abkühlphase von 3 Minuten bei Raumtemperatur von 22°C konnten die verschweißten Gewebe aus der Form entnommen werden. Zur Prüfung der Schweißnahtqualität, wurde an diesen Proben ein Schälversuch durchgeführt.

### 10. Beispiel

Die 0,75 mm dicken Baumwollgewebetücher wurden einlagig in eine Teflonform der Größe 100 mm × 70 mm gelegt, darauf wurden 2 g TPU-Pulver auf Basis von TPU 1 gestreut und mit einem zweiten Tuch abgedeckt. In der Mikrowelle erfolgte eine 105 Sekunden lange Bestrahlung mit einer Leistung von 700 W. Um eine homogene Mikrowellenbestrahlung zu erzielen, wurden die Formen während der Bestrahlung auf einem Drehteller rotiert und zusätzlich wurde die Form nach 60 Sekunden per Hand um 180° auf der horizontalen Achse gedreht. Nach 105 Sekunden ist das Pulver aufgeschmolzen und hat die beiden Tücher miteinander verschweißt. Nach einer kurzen Abkühlphase von 3 Minuten bei Raumtemperatur von 22°C konnten die verschweißten Tücher aus der Form entnommen werden. Zur Prüfung der Schweißnahtqualität, wurde an diesen Proben ein Schälversuch durchgeführt.

### Eigenschaften der erfindungsgemäß verschweißten Produkte

**Tabelle 2**

| Ergebnisübersicht des Schälversuches: | | | | | | | |
|---|---|---|---|---|---|---|---|
| | Bsp 1 | Bsp 2 | Bsp 3 | Bsp 4 | Bsp 5 | Bsp 6 | Bsp 7 |
| Kraftmaximum in N | 7,6 | 41,2 | 114,1 | 31,3 | 66,7 | 20,3 | 86,1 |
| Reißdehnung in mm | 64 | 66 | 59 | 50 | 82 | 50 | 35 |
| Breite in mm | 50 | 60,5 | 37 | 46,25 | 37,5 | 42 | 50 |
| Arbeit in mJ | 0,3 | 1,7 | 3,1 | 0,7 | 3,7 | 0,3 | 1,2 |

Anmerkung zur Schälfestigkeitsprüfung:
Bei den dünnen Folien aus Beispiel 1 und 2, rissen bei den Prüfungen erst die Folien, die Schweißstellen hielten länger.

## Patentansprüche

1. Verfahren zum Verbinden von Körpern durch eine thermoplastische Elastomerzubereitung,
**dadurch gekennzeichnet, dass**
die Zubereitung mittels elektromagnetischer Strahlung soweit erhitzt wird, dass sie schmilzt und so die Körper miteinander verbunden werden, wobei die Frequenz der elektromagnetischen Strahlung zwischen 0,01 GHz und 300 GHz liegt, das Elastomer ein Additiv enthält, das die elektromagnetische Strahlung absorbiert, das Additiv bei 18° C flüssig ist und ausgewählt ist aus der Gruppe Glycerintriacetat, Triethylenglykol, Tripropylenglykol. oder Zitronensäureester.

2. Verfahren nach Anspruch 1,
**dadurch gekennzeichnet, dass** die Körper mit der Elastomerzubereitung zu einem Formkörper verbunden werden.

3. Verfahren nach einem der Ansprüche 1 oder 2, **dadurch gekennzeichnet, dass** der Gelbgrad YI der Zubereitung, gemessen nach der Norm ASTM E 313 - 15, kleiner als 20 ist, bevorzugt kleiner als 15, weiter bevorzugt kleiner als 10, und besonders bevorzugt kleiner als 5.

4. Verfahren nach einem der Ansprüche 1 bis 3, **dadurch gekennzeichnet, dass** das Elastomer ausgewählt ist aus der Gruppe thermoplastisches Polyurethan (TPU), thermoplastisches Polyesterelastomer, sowie thermoplastisches Copolyamid; besonderes bevorzugt ist das Elastomer thermoplastisches Polyurethan.

5. Verfahren nach einem der Ansprüche 1 bis 4, **dadurch gekennzeichnet, dass** die thermoplastischen Elastomerzubereitung vor dem Verschweißen in Form einer Folie, als Granulat und/oder als Pulver vorliegt.

6. Verfahren nach dem Anspruch 5, **dadurch gekennzeichnet, dass** die Folie weniger als 0,2 mm dick ist, bevorzugt weniger als 0,1 mm, bzw. das Pulver oder Granulat einen maximalen Durchmesser von 2 mm aufweist.

7. Verfahren nach einem der Ansprüche 1 bis 6,
**dadurch gekennzeichnet, dass** das Verbinden der Körper mit der Elastomerzubereitung in einer Form erfolgt und so ein Formkörper entsteht.

8. Verfahren nach einem der Ansprüche 1 bis 7, **dadurch gekennzeichnet, dass** ein Körper eine Netzstruktur aufweist.

9. Verwendung einer thermoplastischen Elastomerzubereitung enthaltend zumindest ein Additiv, für das Verschweißen von Körpern, unter Einsatz von elektromagnetischer Strahlung in einem Frequenzbereich zwischen 0,01 GHz und 300 GHz
**dadurch gekennzeichnet, dass**
das Additiv die elektromagnetische Strahlung absorbiert, wobei das Absorptionsmaximum zwischen 0,01 GHz und 300 GHz liegt und das Additiv bei 18° C flüssig ist und ausgewählt ist aus der Gruppe Glycerintriacetat, Triethylenglykol, Tripropylenglykol und Zitronensäureester.

10. Verwendung einer thermoplastischen Elastomerzubereitung nach dem Anspruch 9,
**dadurch gekennzeichnet, dass**
der Anteil des die elektromagnetische Strahlung absorbierenden Additivs 0,01 Gew.-% bis 30 Gew.-% bezogen auf die Elastomerzubereitung beträgt.

11. Verwendung einer thermoplastischen Elastomerzubereitung nach einem der Ansprüche 9 oder 10,
**dadurch gekennzeichnet, dass** es sich bei dem thermoplastischen Elastomer um thermoplastisches Polyurethan handelt.

12. Formkörper erhältlich nach einem Verfahren gemäß der Ansprüche 2 bis 8.

13. Verwendung der Formkörper nach Anspruch 12 für Sichtteile in Automobilen, Kunstleder, Taschen, Verpackung, Stiefel, Schuhe, Schuhsohlen, Einrichtungsgegenstände, Möbel.

## Claims

1. A process for the bonding of solid bodies via a thermoplastic elastomer preparation,
which comprises
heating the preparation by means of electromagnetic radiation until it melts and thus the solid bodies are bonded to one another, where the frequency of the electromagnetic radiation is from 0.01 GHz to 300 GHz, the elastomer comprises an additive that absorbs the electromagnetic radiation, the additive is liquid at 18°C and is selected from the group comprising glycerol triacetate, triethylene glycol, tripropylene glycol and citric ester.

2. The process according to claim 1,
wherein the solid bodies are bonded by the elastomer preparation to give a molding.

3. The process according to either of claims 1 and 2, wherein the yellowness index YI of the preparation, measured in accordance with the standard ASTM E313-15, is smaller than 20, preferably smaller than 15, more preferably smaller than 10 and particularly preferably smaller than 5.

4. The process according to any of claims 1 to 3, wherein the elastomer is selected from the group of thermoplastic polyurethane (TPU), thermoplastic polyester elastomer, and thermoplastic copolyamide, where the elastomer is particularly preferably thermoplastic polyurethane.

5. The process according to any of claims 1 to 4, wherein the form in which the thermoplastic elastomer preparation is present before fusion is that of a film, of granulate and/or of powder.

6. The process according to claim 5, wherein the thickness of the film is less than 0.2 mm, preferably less than 0.1 mm, or the maximum diameter of the powder or granulate is 2 mm.

7. The process according to any of claims 1 to 6, wherein the bonding of the solid bodies by the elastomer preparation takes place in a mold, and a molding is thus produced.

8. The process according to any of claims 1 to 7, wherein a solid body has a network structure.

9. The use of a thermoplastic elastomer preparation comprising at least one additive for the welding of solid bodies, with use of electromagnetic radiation in the frequency range from 0.01 GHz to 300 GHz, wherein
the additive absorbs the electromagnetic radiation, where the absorption maximum is from 0.01 GHz to 300 GHz and the additive is liquid at 18°C and is selected from the group comprising glycerol triacetate, triethylene glycol, tripropylene glycol and citric ester.

10. The use of a thermoplastic elastomer preparation according to claim 9, wherein
the proportion of the additive that absorbs the electromagnetic radiation is from 0.01% by weight to 30% by weight based on the elastomer preparation.

11. The use of a thermoplastic elastomer preparation according to either of claims
9 and 10,
wherein the thermoplastic elastomer is thermoplastic polyurethane.

12. A molding obtainable by a process according to any of claims 2 to 8.

13. The use of the moldings according to claim 12 for visible parts in automobiles, synthetic leather, bags, packaging, boots, shoes, shoe soles, fittings or furniture.

## Revendications

1. Procédé pour l'assemblage de corps par une préparation d'élastomère thermoplastique,
**caractérisé en ce que**
la préparation est chauffée au moyen d'un rayonnement électromagnétique jusqu'à ce qu'elle fonde et que les corps soient ainsi assemblés entre eux, la fréquence du rayonnement électromégnétique se situant entre 0,01 GHz et 300 GHz, l'élastomère contenant un additif qui absorbe le rayonnement électromagnétique, l'additif étant liquide à 18 °C et étant choisi dans le groupe constitué par le triacétate de glycérol, le triéthylèneglycol, le tripropylèneglycol et les esters d'acide citrique.

2. Procédé selon la revendication 1,
**caractérisé en ce que** les corps sont assemblés par la préparation d'élastomère en un corps moulé.

3. Procédé selon l'une quelconque des revendications 1 et 2, **caractérisé en ce que** l'indice de jaune YI de la préparation, mesuré selon la norme ASTM E 313 - 15, est inférieur à 20, de préférence inférieur à 15, encore mieux inférieur à 10, et de façon particulièrement préférée inférieur à 5.

4. Procédé selon l'une quelconque des revendications 1 à 3, **caractérisé en ce que** l'élastomère est choisi dans le groupe constitué par le polyuréthane thermoplastique (TPU), un élastomère polyester thermoplastique, ainsi qu'un copolyamide thermoplastique ; de façon particulièrement préférée l'élastomère est le polyuréthane thermoplastique.

5. Procédé selon l'une quelconque des revendications 1 à 4, **caractérisé en ce qu'**avant le soudage la préparation d'élastomère thermoplastique se trouve sous forme d'un film, sous forme de produit granulé et/ou sous forme de poudre.

6. Procédé selon la revendication 5, **caractérisé en ce que** le film a une épaisseur inférieure à 0,2 mm, de préférence inférieure à 0,1 mm, ou, respectivement, la poudre ou le produit granulé présente un diamètre maximum de particule de 2 mm.

7. Procédé selon l'une quelconque des revendications 1 à 6,
**caractérisé en ce que** l'assemblage des corps par la préparation d'élastomère s'effectue dans un moule et il en résulte ainsi un corps moulé.

8. Procédé selon l'une quelconque des revendications 1 à 7, **caractérisé en ce qu'**un corps présente une structure réticulaire.

9. Utilisation d'une préparation d'élastomère thermoplastique contenant au moins un additif, pour le soudage de corps, avec utilisation d'un rayonnement électromagnétique dans une gamme de fréquence entre 0,01 GHz et 300 GHz, **caractérisée en ce que** l'additif absorbe le rayonnement électromagnétique, le maximum d'absorption se situant entre 0,01 GHz et 300 GHz et l'additif étant liquide à 18 °C et étant choisi dans le groupe constitué par le triacétate de glycérol, le triéthylèneglycol, le tripropylèneglycol et les esters d'acide citrique.

10. Utilisation d'une préparation d'élastomère thermoplastique selon la revendication 9, **caractérisée en ce que**
la proportion de l'additif absorbant le rayonnement électromagnétique vaut de 0,01 % en poids à 30 % en poids par rapport à la préparation d'élastomère.

11. Utilisation d'une préparation d'élastomère thermoplastique selon l'une quelconque des revendications
9 et 10,
**caractérisée en ce que** pour ce qui est de l'élastomère thermoplastique il s'agit de polyuréthane thermoplastique.

12. Corps moulés pouvant être obtenus conformément à un procédé selon l'une quelconque des revendications 2 à 8.

13. Utilisation des corps moulés selon la revendication 12 pour des pièces visibles dans des automobiles, du cuir artificiel, des sacs, l'emballage, des bottes, chaussures, semelles de chaussures, objets d'ameublement, meubles.
